# EUROPEAN PATENT SPECIFICATION

(11) **EP 4 377 630 B1**
(45) Date of publication and mention of the grant of the patent: **02.04.2025**
(21) Application number: 22789161.1
(22) Date of filing: 27.07.2022
(51) Int. Cl.: G01B 5/00, B23Q 1/03, B23Q 3/18, F15B 15/24, F16M 13/00, G12B 5/00

(54) **AUTOMATIC POSITIONING SYSTEM FOR MEASURING WORKPIECES**
AUTOMATISCHES POSITIONIERUNGSSYSTEM ZUM MESSEN VON WERKSTÜCKEN
SYSTÈME DE POSITIONNEMENT AUTOMATIQUE POUR LA MESURE DE PIÈCES

(30) Priority: 30.07.2021 EP 21382716
(43) Date of publication of application: 05.06.2024
(73) Proprietor: Hexagon Metrology, S.A., 08290 Barcelona (ES); GESTAMP AUTOMOCIÓN, S.A., 48220 Abadiano, Bizkaia (ES)
(72) Inventor: CAMPOS USLÉ, Ignacio, 08290 Barcelona (ES); CARCEDO MOLDÓN, Rubén, 08290 Barcelona (ES); LORENZO BAZ, Manuel, 28014 Madrid (ES); FERNÁNDEZ DE LANDA LASARTE, Ignacio, 28014 Madrid (ES)
(74) Representative: Isern Patentes y Marcas S.L.
(86) International application number: PCT/EP2022/071072
(87) International publication number: WO 2023/006815

(56) References cited:
- US-A- 4 848 005
- US-A- 5 887 430
- US-B1- 6 186 567

## Description

### TECHNICAL FIELD OF THE INVENTION

The present invention relates to systems for fixing and measuring workpieces; in particular, it relates to automatic systems for fixing and subsequently measuring workpieces wherein at least one linear actuator provides an adjustment of the workpiece by means of linearly moving a rod provided therein, wherein, depending on the size, said workpiece is supported in its entirety by several linear actuators, each of the rods of said actuators being able to be adjusted in the stroke thereof according to the shape of the workpiece to be supported and measured.

### STATE OF THE ART

In the manufacturing industry, identifying different geometric references on a workpiece is well known, for example, on workpieces formed in sheet metal that, due to the design thereof, have sinuous or complex shapes that make it difficult to clamp and/or measure them with conventional tools, actuating a locating element toward an extended position, wherein the locating element couples to a workpiece, and a retracted position, wherein the locating element uncouples the workpiece.

Thus, it is possible to use several types of locating elements depending on the geometric reference to be identified. For example, locating openings provided in sheet metal parts can be located by using locating pins. Retractable locating pins have been developed to automatically enter and exit the openings provided in sheet metal parts. Although locating pins are ideal for locating openings or openings within sheet metal parts, it is also possible to use L-blocks or the like to locate a surface or an edge of a workpiece. These blocks are used by coupling them to the locating pin or to an output shaft to which the locating pin is connected.

A reflection of the state of the art regarding the use of these L-blocks is observed in European patent EP1636499 B1 which discloses a linearly adjustable apparatus having a stroke adjustment for locating geometric references on a workpiece. The apparatus comprises a casing having a linear actuator for actuating a locating element between an extended position, wherein said locating element couples to said workpiece, and a retracted position, wherein said locating element disengages said workpiece. A bearing assembly is connected to the housing and slidably supports the locating element. The bearing assembly has an external threaded portion that threadably couples to an internal threaded portion of the housing to provide linear adjustment of the stroke length of the positioning member along a longitudinal axis of the housing. The locating element includes an output shaft that is connected to the linear actuator at a first end of the output shaft, and a locating pin that is connected to a second opposite end of the output shaft. The positioning pin may comprise several structures, such as a substantially cylindrical member, an L-block mounting piston with a movement pin, and an L-block mounting piston with an L-block. The apparatus may further comprise a sensor device connected to and extending from the casing of the apparatus to allow for the electronic control of the position of the locating element.

It can be seen from the prior disclosure that locating elements for workpieces in the form of linear actuators with adjustment of the stroke length thereof are known, in addition to L-blocks coupled to said actuator for clamping the edges of the workpiece. However, more specialised tools, which replace the L-blocks, are increasingly required to improve the clamping of workpieces with shapes that are becoming more complex and are therefore more difficult to clamp and/or handle.

Other relevant prior disclosure is the patent document US4848005A which discloses a fixture comprising a number of rearrangeable elements; a hand operated by a robot and designed to position the aforementioned rearrangeable elements on a reference table; and a number of part supporting and clamping means. The rearrangeable elements are comprised of a tubular casing sliding on an air-cushioned pad; and a rod designed to slide axially inside the aforementioned tubular casing and on to the top portion of which are secured the aforementioned supporting and positioning means.

Similarly, the patent document US6186567B1 discloses a clamping holder provides both an apparatus and method enabling quick, precise automatic repositioning of positional devices, particularly useful in edging and milling applications. A clamping holder is capable of automatically approaching, lifting up to surround, engaging and picking up a positioning device, translating to a proper and precise placement location, lowering it into place, disengaging the clamping holder, lowering to provide exit clearance around the positioning device and moving away to either position the next positioning device or to move on to the next task. In addition to this automatic mode, the spindle may also be manually loaded by a worker standing well outside the work area of the main processing machine. A spindle shaped clamping holder has a radial side opening to accept a bearing member and piston support of a locational device. Within the clamping holder is a chamber having a self-centring tapered surface to allow the cylindrical shape of the locator bearing member to be exactly centred in the clamping holder when the clamping holder lifts or when the locator downwardly moves within the clamping holder. A single acting, spring opposed, piston clamps down upon the top surface of the cylindrical locator bearing which locks the locator bearing and piston into exact centred alignment with the clamping holder

In addition to the foregoing, disclosures such as the aforementioned European patent, or similar apparatuses such as those disclosed in US 6,298,572, EP 1,050,738 A2 or US 5,829,151, disclose linear actuators which are arranged on platforms or work tables manually by the operators and, at the same time, are adjusted in the stroke thereof also manually or by direct operator intervention in such a way that in the method of placing the actuators and adjusting the stroke thereof, human errors occur, errors which could be reduced if all these locating and/or adjusting operations were automated.

Therefore, improvements in the art are required to provide more advanced clamping that allows for reliable arrangements of the workpieces, as well as automations wherein there is no human intervention, allows for more precise placements and/or adjustments of the linear actuators that clamp said workpieces, and allows for the subsequent measurement thereof.

### DESCRIPTION

In order to respond to the needs for improvement found in the art, the present invention provides an automatic positioning system for measuring workpieces that comprises a flexible actuator module provided for clamping and measuring workpieces, the actuator module being able to be transported and activated by a robot in turn commanded by a processing unit, such that the robot is prepared to transport the actuator module and locate it in a working position, as well as actuate said actuator module, once put in the working position, and adjust it in the required position according to the requirement of the workpiece.

The actuator module comprises a body with a base and a rod linearly movable with respect to said body. At a first end, opposite the base, the rod comprises connection means configured to connect a tool in turn prepared to fix a workpiece. These connection means can also be prepared for the coupling thereof with the robot, so that said robot can clamp and transport the actuator module. Alternatively, for transport by the robot, the actuator module comprises a clamping portion provided for the coupling of said robot.

Preferably, the connection means arranged at the end of the rod comprise a pneumatic coupling prepared to also correspond to the torque thereof provided on the tooling to be coupled and/or on the robot.

In particular, the actuator module comprises a valve block that can be coupled on the body, being provided with communication means configured to exchange data with the robot and/or with the processing unit. In preferred embodiments of the invention, the valve block is a wireless communication solenoid valve block, such that data transmission between the robot and/or the processing unit with the valve block is wireless. This has the advantage, in addition to the speed with which the data can be transmitted, of eliminating the wiring that hinders the operation and mobility of the actuator modules and/or the arrangement thereof at the work site thereof.

Moreover, the robot, which within the context of the invention is understood as a robotic arm or the like, is provided with an engaging portion configured to clamp the clamping portion arranged on the body and/or the end of the rod of the actuator module. In the preferred embodiments, this engaging portion comprises a pneumatic quick coupling that corresponds to or complements the counterpart thereof provided on the tooling to be coupled and/or at the end of the rod of the actuator module.

Likewise, the robot comprises communication means configured to receive and/or transmit data or instructions to the actuator module and/or to the processing unit. In this way, the robot can enable, via wireless communication, the valve block so that the rod can move or be moved toward the position of the stroke thereof wherein it is required according to the workpiece to be clamped and/or measured.

In addition to eliminating much of the wiring used in systems for data transmission of this type, as mentioned previously, transmitting the data from the robot to the actuator module allows an industry 4.0 level of automation to be reached, wherein the system is fully automated with hardly any operator intervention, thus making it more flexible when faced with changes in the processes, as well as more precise in terms of operation by eliminating the human factor as much as possible.

The system of the present invention also has a work plate, as a workbench, provided for the coupling of at least one actuator module, this work plate being able to be clamped and moved by the robot. Therefore, a person skilled in the art can see that all the elements that are part of the system can be operated and/or handled by the robot or by a similar device, providing the same with a level of automation that has not been envisaged or described in the state of the art. This constitutes a remarkable advantage since the automation of the disclosed system manages to eliminate the intervention of human personnel. In this way, the system works autonomously in spaces enabled for this purpose, where the robot, through commands from the processing unit, moves and places one or more actuator modules, and one or more tools, from one place where they can be stored, such as islands or similar, onto the work plate, to activate said actuator module, to be able to move the rod and/or, subsequently, to activate the tool.

Moreover, as mentioned previously, the processing unit of the system is configured to process, calculate and transmit data in the form of instructions to operate the robot, as well as to receive data from the same. Therefore, this processing unit, which could be integrated in the robot or, preferably, be external thereto, is generally configured to manage the system, selecting the work plate and placing it by means of the robot in the position thereof, selecting one or more suitable actuator modules, according to the workpiece to be clamped and measured, and moving them by the robot to the working position thereof on the plate, selecting one or more tools and putting each one at the end of the rod of the actuator module. In turn, commanding the robot to enable the valve block, such that said valve block in turn enables the rod to move or be moved by the robot to the required stroke length, and at the same time so that it enables the actuation of the tool.

### BRIEF DESCRIPTION OF THE FIGURES

The foregoing and other advantages and features will be more fully understood from the following detailed description of exemplary embodiments with reference to the accompanying drawings, which should be considered by way of illustration and not limitation, wherein:
- Fig. 1 is a schematic view by way of example of an actuator module of the system of the invention.
- Fig. 2 is a schematic view of the automatic positioning system for measuring workpieces in which essentially all the elements that are part of the same are shown.

### DETAILED DESCRIPTION OF AN EXEMPLARY EMBODIMENT

In the following detailed description, numerous specific details are set forth in the form of examples to provide a thorough understanding of the relevant teachings. However, it will be apparent to those skilled in the art that the present teachings can be implemented without such details.

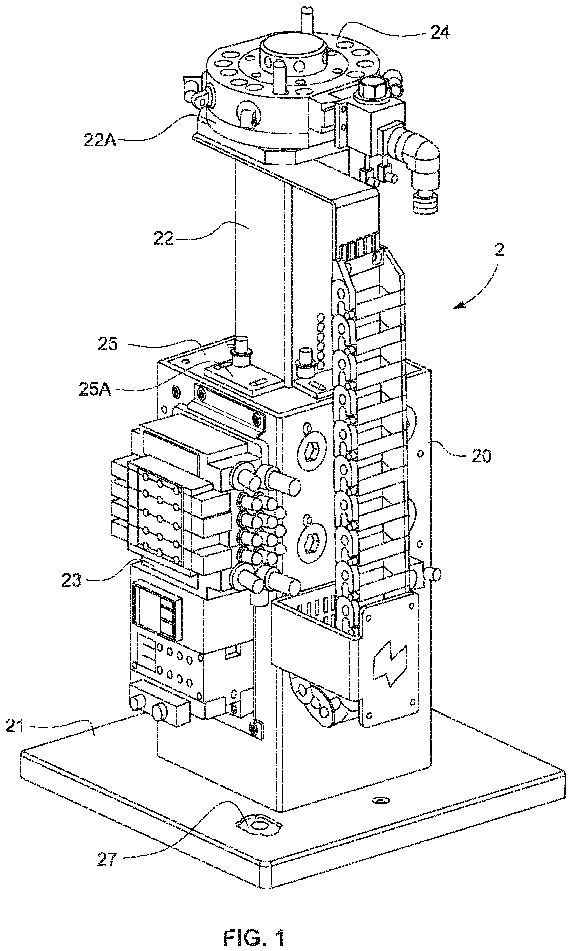

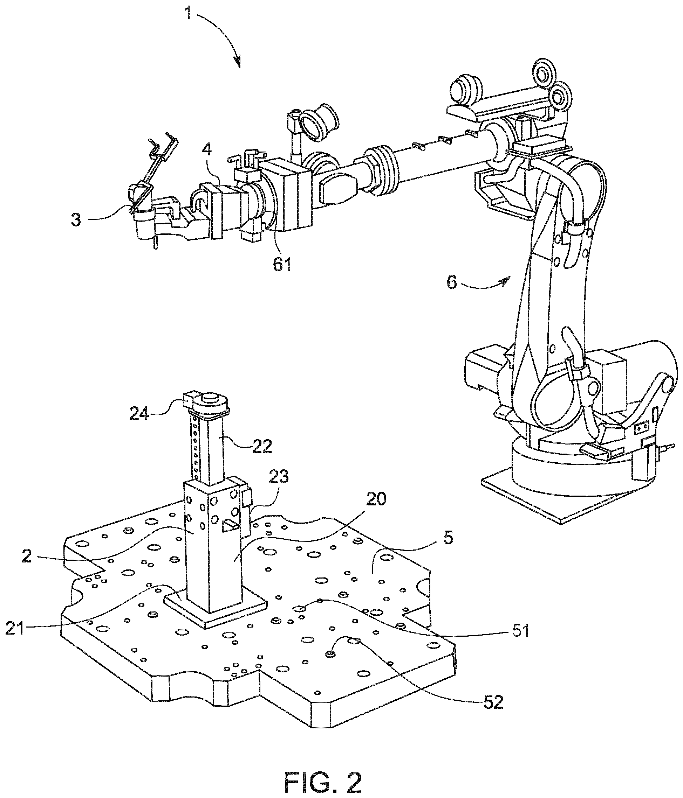

As seen in the figures that accompany the present detailed description, specifically Figure 2, the present invention provides an automatic positioning system for measuring workpieces 1, system 1 hereinafter, these workpieces being of the type formed in metal sheet, fibreglass or the like, which, by design, have sinuous or complex shapes, for example, a car door or hood. The system comprises at least one actuator module 2 having a body 20 with a base 21 provided for fixing said actuator module 2 on a work plate 5. The actuator module 2 comprises a rod 22 linearly movable with respect to said body 20, as seen in Figure 1.

Within the context of the invention, the term "actuator module" has been used to refer to the fact that said element is not a simple linear actuator such as those known in the state of the art, but rather an "actuator module" in which different elements are arranged which enable, in addition to the known linear movement of the rod, said movement and the coupling of various tools 3 to be managed in an automated manner, tools which in turn are used to clamp the different workpieces.

Preferably, the actuator module 2 is powered for actuation by air; therefore it is of the pneumatic type, which is advantageous from the point of view of simplifying components and automating the system.

According to the requirement, size and shape of the workpiece, the actuator module 2 may have different sizes, a particular feature thereof being that the linear stroke of the rod 22 may be movable, preferably in discrete intervals of 10 mm, which is useful for accurately adjusting the workpieces to be clamped and measured.

As can be seen in Figure 1, at a first end 22A of the rod 22, which is opposite the base 21, there are connection means 24 configured to connect each of the various tools 3. In the preferred embodiment, these connection means 24 take the form of a pneumatic quick coupler, of the quick tool exchanger type, which, due to the flexibility, speed and accuracy thereof, is ideal for clamping the tool 3.

As can be seen in Figure 1, the actuator module 2 comprises a valve block 23 that can be coupled to the body 20, wherein said valve block 23 is configured to enable the movement of the rod 22, and wherein said valve block 23 comprises communication means (not shown) configured to receive the data or instructions necessary for said valve block 23 to enable the movement of the rod 22.

Preferably, the valve block 23 is a wireless communication solenoid valve block, such that data transmission with said valve block 23 is wireless. This has the advantage, in addition to the speed with which the data can be transmitted, of eliminating the wiring that hinders the operation and mobility of the actuator modules and/or the arrangement thereof at the work site thereof.

Other elements that are part of the actuator module 2 are a sleeve 25 arranged inside the body 20 through which the rod 22 slides, scrapers 25A arranged on the sleeve 25 and/or on the body 20 to eliminate excess lubricant on the rod 20, positioners (not shown), preferably of the pneumatic type, arranged on the body 20 to fix the stroke of the rod in a particular position in the stroke, for example, at stroke intervals of 10 mm. Caps and other known accessory elements are properly arranged on the actuator module 2 to guarantee the proper functioning thereof.

In addition to the foregoing, a control module 27 can be coupled on the base 21, control module configured to control the electrical power connection and the air flow used in the actuator module 2, either the one used in the valve block 23 or the one needed to move the rod 22 in the stroke thereof, in the event that said rod 22 can be moved by air.

As can be seen in Figure 2, the system 1 of the present invention further comprises a work plate 5, which is provided to be arranged in a chassis or frame of a machine structure (not shown) in which the entire measuring process of the workpiece will be carried out, wherein the base 21 of the actuator module 2 can be coupled to said work plate 5. For this reason, the work plate 5 has coupling means prepared for the coupling of the base 21 in the form of, for example, combinations of holes both in the base 21 and in the work plate which are passed through by pins, bolts or the like. In a preferred embodiment, the base 21 of the actuator module 2 has two pins that are positioned in a matrix of holes in the work plate 5. Once all the actuator modules 2 are located in the position thereof on the work plate 5, said work plate comprises a locking mechanism (not shown) that locks these pins ensuring the actuator modules 2 are correctly fixed.

Likewise, the work plate 5 comprises at least one connection module 52 which is provided to be connected with the control module 27 of the base 21, when the actuator module 2 is coupled to the work plate 5. In this way, the flow of power and air towards the valve block 23 is established through the connection of the connection module 52 with the control module 27. In the preferred embodiment, illustrated in Figure 2, the connection of the connection module 52 with the control module 27 is of the female-male type, the control module 27 being able to be the male and the connection module 52 being able to be the female, although the reverse configuration is also possible. It is important to bear in mind that a processing unit (not shown), which will be discussed in detail later, is responsible for controlling the flow of power and air used throughout the system 1 of the invention.

Moreover, as seen in Figure 2, the system 1 of the invention comprises a robot 6, robot being understood, within the context of the present invention, as an electromechanical device, provided with and/or controlled by a processing unit (CPU) (not shown), with the ability and purpose of movement to perform multiple tasks in a flexible manner by following the instructions provided in an algorithm and executed by the CPU. The robot 6 of the present invention is provided with an engaging portion 61 configured to clamp the body 20 and/or the rod 22 of the actuator module 2, and/or each of the tools 3, and/or the work plate 5, such that said robot 6, through this engaging portion 61, is prepared to clamp the mentioned elements, move them, locate them in the working position thereof and activate them to carry out the different functions thereof. In the embodiment illustrated in Figure 2, the engaging portion 61 may comprise a pneumatic quick coupler, of the quick tool exchanger type, similar to the connection means 24. Since, in the preferred embodiments of the invention, the engaging portion 61 comprises clamping mechanisms known in the technical field and commercially available, a more detailed description is not necessary in this regard, since it is possible to use any kind of clamping known without deviating from the scope of the invention.

The system 1 of the present invention, as mentioned, comprises a processing unit (not illustrated) configured to command the robot 6 in all operations thereof, command the actuator module 2 and/or the tool 3 through the valve block 23, and in general control/command the overall operation of the entire system 1. The processing unit is provided, among other things, with a processor, microcontroller or the like, storage means in which an algorithm to be executed by the processor is stored, and communication means through which data from the robot 6, and/or from the valve block 23, and/or from the tool 3, and/or from the locking mechanism of the work plate 5 are transmitted and/or received.

Moreover, as can be seen in Figure 2, the robot 6 comprises a clamp 4 that can be coupled to the engaging portion 61 of the robot 6, said clamp 4 being able to be actuated by said robot and/or by the processing unit, and being configured to clamp the actuator module 2 and/or the first end of the rod 22A, and/or the connection means 24, and/or the tool 3, and/or the work plate 5.

Likewise, the tool 3 can integrate different pneumatic drives and sensors for the operation thereof in clamping the workpieces to be measured. Thus, once the robot 6 has placed the tool 3 in an actuator module 2, the passage of electrical and pneumatic power supply to said tool 3 is enabled to actuate all that the same incorporates via the solenoid valve block 23, this solenoid valve block in turn being controlled by the processing unit. Since the tool 3 can have various technical-functional and structural shapes and configurations aimed at clamping each workpiece in particular, a person skilled in the art will see that all these structural and/or functional variations of said tool are found within the scope of the invention.

The robot 6 further comprises communication means (not illustrated) configured to receive and/or transmit data or instructions; in particular, these communication means are provided for exchanging data or instructions with the valve block 23 to enable the movement of the rod 22 and/or of the tool 3. In other words, the movement of the rod 22 and/or of the tool 3 can be enabled by the robot 6, which has the advantage of reducing operator intervention, automating the process.

Once the robot 6 communicates with the valve block 23 to enable the movement of the rod 22, said rod can move to the required position by actuating means (not shown) arranged in the actuator module 2, for example, by air, or, preferably, it can be moved by the robot 6, said robot clamping the rod 22 by the connection means 24 or by the tool 3, if said tool 3 is coupled to the first end 22A of the rod 22. Preferably, the robot 6 can clamp the connection means 24 of the rod 22 by the engaging portion 61 of said robot 6.

Alternatively, through the communication means, the processing unit can transmit data or instructions directly to the valve block 23 to enable the movement of the rod 22, in a way similar to how the robot 6 would do it. Therefore, in preferred embodiments of the system 1 of the present invention, it is possible to control one or more actuator modules 2 by means of the robot 6 and others by means of the processing unit directly. The valve block 23, upon receiving the instructions from the processing unit, commands both the actuator module 2 and the tool 3 arranged in said actuator module 2, being able to actuate, for example, pneumatic flanges of said tool and control the sensors of the same. This makes the system 1 more flexible and faster since the actuator modules 2 can be actuated at the same time, but independently.

A person skilled in the art can see that, depending on the size and shape of the workpiece, different sized actuator modules 2 can be arranged on the work plate 5, the stroke of the rod 22 of each module 2 being able to be adjusted to the required length and, at the same time, being able to use different tools 3 in each of the actuator modules 2 to adapt to the fixation required by the workpiece.

From the foregoing disclosure, it is clear that the level of automation of the proposed system 1 eliminates the intervention of operators and human personnel in general. In this sense, as can be seen from Figure 2, the system 1 is preferably implemented to operate autonomously in spaces enabled for this purpose, where the robot 6, through commands from the processing unit, selects, moves and places one or more actuator modules 2, and one or more tools 3, from a place where they can be stored, such as islands or similar, onto the work plate 5, to activate said actuator module 2, to be able to move the rod 22 and/or, subsequently, to activate the tool 3.

## Claims

1. An automatic positioning system (1) for measuring workpieces comprising;
- an actuator module (2) comprising a body (20) with a base (21), and a rod (22) linearly movable with respect to said body (20);
- a robot (6) provided with an engaging portion (61), wherein said engaging portion (61) is configured to clamp the body (20) and/or the rod (22) of the actuator module (2), and with communication means configured to receive and/or transmit data; and
- a processing unit configured to transmit and/or receive data from the robot (6);
- a valve block (23) couplable to the body (20) of the actuator module (2) configured to enable the movement of the rod (22), said valve block (23) comprising communication means configured to exchange data with the robot (6) and/or with the processing unit; and
wherein, in an operational condition, the robot (6) is configured to transport the actuator module (2) and to communicate with the valve block (23) to enable the movement of the rod (22) and adjust it in a required position;
**characterised in that** it comprises:
- a work plate (5), as a workbench wherein the workpiece will be positioned and measured, to which the base (21) of the actuator module (2) is couplable, said work plate (5) being able to be clamped and moved by the robot (6).

2. The system according to claim 1, wherein the valve block (23) is a wireless communication solenoid valve block, such that data transmission between the robot (6) and said valve block (23) is wireless.

3. The system according to any of claims 1 or 2, wherein the valve block (23) is of the pneumatic type.

4. The system according to any of claims 1 to 3, wherein the rod (22) comprises at a first end (22A), opposite the base (21), connection means (24) configured for the engaging portion (61) of the robot and/or for the connection of a tool (3) that, in turn, is prepared to fix a workpiece, said tool (3) being able to be actuated by the valve block (23) and/or by the robot (6).

5. The system according to any of claims 1 to 4, wherein the base (21) comprises a control module (27), configured to control an electrical power connection and an air flow to the valve block (23).

6. The system according to any of claims 1 to 5, comprising a clamp (4) that can be coupled to the engaging portion (61) of the robot (6), being able to be actuated by said robot (6), said clamp (4) being configured to clamp the actuator module (2) and/or the first end of the rod (22A) and/or the tool (3).

7. The system according to any of the claims 1 to 6, wherein the work plate (5) comprises a locking mechanism that can be controlled and actuated by the processing unit and/or by the robot (6), said locking mechanism being configured to fix the base plate (21) of the actuator module (2) to said work plate (5).

8. The system according to any of claim 7, when the claim 7 depends on claim 5, wherein the work plate (5) comprises at least one connection module (52) that can be connected with the control module (27) of the base (21) such that a flow of power to the valve block (23) is carried out through the connection module (52) and through the control module (27).

## Patentansprüche

1. Automatisches Positioniersystem (1) zum Vermessen von Werkstücken, umfassend:
- ein Aktuatormodul (2), umfassend einen Körper (20) mit einer Basis (21) und eine Stange (22), die in Bezug auf den Körper (20) linear bewegbar ist;
- einen Roboter (6), versehen mit einem Eingriffsabschnitt (61), wobei der Eingriffsabschnitt (61) dazu konfiguriert ist, den Körper (20) und/oder die Stange (22) des Aktuatormoduls (2) festzustellen, und mit Kommunikationsmitteln, die dazu konfiguriert sind, Daten zu empfangen und/oder zu übertragen; und
- eine Verarbeitungseinheit, dazu konfiguriert, Daten zu übertragen und/oder vom Roboter (6) zu empfangen;
- einen Ventilblock (23), koppelbar mit dem Körper (20) des Aktuatormoduls (2) und dazu konfiguriert, die Bewegung der Stange (22) zu ermöglichen, wobei der Ventilblock (23) Kommunikationsmittel umfasst, die dazu konfiguriert sind, Daten mit dem Roboter (6) und/oder mit der Verarbeitungseinheit auszutauschen; und
wobei der Roboter (6) in einem Betriebszustand dazu konfiguriert ist, das Aktuatormodul (2) zu transportieren und mit dem Ventilblock (23) zu kommunizieren, um die Bewegung der Stange (22) zu ermöglichen und sie in eine erforderliche Position einzustellen;
**dadurch gekennzeichnet, dass** er umfasst:
- eine Arbeitsplatte (5) als eine Werkbank, auf der das Werkstück positioniert und vermessen wird, an die die Basis (21) des Aktuatormoduls (2) koppelbar ist, wobei die Arbeitsplatte (5) durch den Roboter (6) festgestellt und bewegt werden kann.

2. System nach Anspruch 1, wobei der Ventilblock (23) ein drahtloser Kommunikationsmagnetventilblock ist, sodass die Datenübertragung zwischen dem Roboter (6) und dem Ventilblock (23) drahtlos erfolgt.

3. System nach einem der Ansprüche 1 oder 2, wobei der Ventilblock (23) vom pneumatischen Typ ist.

4. System nach einem der Ansprüche 1 bis 3, wobei die Stange (22) an einem ersten Ende (22A), gegenüber der Basis (21), Verbindungsmittel (24) aufweist, die für den Eingriffsabschnitt (61) des Roboters und/oder für den Anschluss eines Werkzeugs (3) konfiguriert sind, das seinerseits für die Befestigung eines Werkstücks vorbereitet ist, wobei das Werkzeug (3) durch den Ventilblock (23) und/oder durch den Roboter (6) betätigt werden kann.

5. System nach einem der Ansprüche 1 bis 4, wobei die Basis (21) ein Steuermodul (27) umfasst, dazu konfiguriert, eine elektrische Stromverbindung und einen Luftstrom zum Ventilblock (23) zu steuern.

6. System nach einem der Ansprüche 1 bis 5, umfassend eine Feststellvorrichtung (4), die mit dem Eingriffsabschnitt (61) des Roboters (6) gekoppelt werden kann, wobei sie durch den Roboter (6) betätigt werden kann, wobei die Feststellvorrichtung (4) dazu konfiguriert ist, das Aktuatormodul (2) und/oder das erste Ende der Stange (22A) und/oder das Werkzeug (3) festzustellen.

7. System nach einem der Ansprüche 1 bis 6, wobei die Arbeitsplatte (5) einen Verriegelungsmechanismus aufweist, der von der Verarbeitungseinheit und/oder dem Roboter (6) gesteuert und betätigt werden kann, wobei der Verriegelungsmechanismus dazu konfiguriert ist, die Basisplatte (21) des Aktuatormoduls (2) an der Arbeitsplatte (5) zu befestigen.

8. System nach einem der Ansprüche 7, wenn der Anspruch 7 von Anspruch 5 abhängig ist, wobei die Arbeitsplatte (5) mindestens ein Verbindungsmodul (52) umfasst, das mit dem Steuermodul (27) der Basis (21) verbunden werden kann, sodass ein Energiefluss zum Ventilblock (23) durch das Anschlussmodul (52) und durch das Steuermodul (27) erfolgt.

## Revendications

1. Système de positionnement automatique (1) permettant de mesurer des pièces à usiner comprenant ;
- un module d'actionneur (2) comprenant un corps (20) avec une base (21), et une tige (22) mobile linéairement par rapport audit corps (20) ;
- un robot (6) pourvu d'une partie de mise en prise (61), dans lequel ladite partie de mise en prise (61) est conçue pour serrer le corps (20) et/ou la tige (22) du module d'actionneur (2), et avec des moyens de communication conçus pour recevoir et/ou transmettre des données ; et
- une unité de traitement conçue pour transmettre et/ou recevoir des données du robot (6) ;
- un bloc de vannes (23) accouplé au corps (20) du module d'actionneur (2) conçu pour permettre le mouvement de la tige (22), ledit bloc de vannes (23) comprenant des moyens de communication conçus pour échanger des données avec le robot (6) et/ou avec l'unité de traitement ; et
dans lequel, dans un état fonctionnel, le robot (6) est conçu pour transporter le module d'actionneur (2) et pour communiquer avec le bloc de vannes (23) afin de permettre le mouvement de la tige (22) et de l'ajuster dans une position requise ;
**caractérisé en ce qu'**il comprend :
- une plaque de travail (5), tel qu'un établi dans lequel la pièce à usiner sera positionnée et mesurée, à laquelle la base (21) du module d'actionneur (2) peut être accouplée, ladite plaque de travail (5) pouvant être serrée et entraînée en mouvement par le robot (6).

2. Système selon la revendication 1, dans lequel le bloc de vannes (23) est un bloc d'électrovannes à communication sans fil, de telle sorte que la transmission de données entre le robot (6) et ledit bloc de vannes (23) s'effectue sans fil.

3. Système selon l'une quelconque des revendications 1 ou 2, dans lequel le bloc de vannes (23) est du type pneumatique.

4. Système selon l'une quelconque des revendications 1 à 3, dans lequel la tige (22) comprend au niveau d'une première extrémité (22A), à l'opposé de la base (21), des moyens de raccordement (24) conçus pour la partie de mise en prise (61) du robot et/ou pour le raccordement d'un outil (3) qui, à son tour, est préparé pour fixer une pièce à usiner, ledit outil (3) pouvant être actionné par le bloc de vannes (23) et/ou par le robot (6).

5. Système selon l'une quelconque des revendications 1 à 4, dans lequel la base (21) comprend un module de commande (27), conçu pour commander une connexion de puissance électrique et un flux d'air vers le bloc de vannes (23).

6. Système selon l'une quelconque des revendications 1 à 5, comprenant une pince (4) qui peut être accouplée à la partie de mise en prise (61) du robot (6), pouvant être actionnée par ledit robot (6), ladite pince (4) étant conçue pour serrer le module d'actionneur (2) et/ou la première extrémité de la tige (22A) et/ou l'outil (3).

7. Système selon l'une quelconque des revendications 1 à 6, dans lequel la plaque de travail (5) comprend un mécanisme de verrouillage qui peut être commandé et actionné par l'unité de traitement et/ou par le robot (6), ledit mécanisme de verrouillage étant conçu pour fixer la plaque de base (21) du module d'actionneur (2) à ladite plaque de travail (5).

8. Système selon l'une quelconque de la revendication 7, lorsque la revendication 7 dépend de la revendication 5, dans lequel la plaque de travail (5) comprend au moins un module de raccordement (52) qui peut être raccordé au module de commande (27) de la base (21) de telle sorte qu'un flux de puissance vers le bloc de vannes (23) est effectué à travers le module de raccordement (52) et à travers le module de commande (27).
